# EUROPEAN PATENT APPLICATION

(11) **EP 3 147 919 A1**
(43) Date of publication of application: **29.03.2017**
(21) Application number: 15796761.3
(22) Date of filing: 14.04.2015
(51) Int. Cl.: H01G 9/042, H01G 11/36, H01G 11/22

(54) **METAL FOIL WITH CONDUCTIVE LAYER AND METHOD FOR MANUFACTURING SAME**

(30) Priority: 22.05.2014 RU 2014120780
(71) Applicant: MCD Technologies S.a.r.l, 8070 Bertrange (LU)
(72) Inventor: PREDTECHENSKIY, Mikhail Rudolfovich, g. Novosibirsk 630090 (RU); BOBRENOK, Oleg Filippovich, Novosibirsk 630090 (RU); KOSOLAPOV, Andrey Gennadievich, Novosibirsk 630008 (RU)
(74) Representative: Eterno, Enrico
(86) International application number: PCT/RU2015/000244
(87) International publication number: WO 2015/178801

(57) **Abstract**

Proposed is metal foil having a surface provided with a conductive layer comprising carbon nanotubes, wherein the conductive layer is applied so that the carbon nanotubes are arranged on the foil surface randomly and in an amount of 100 ng/cm²-10 µg/cm².

A method for manufacturing metal foil with a conductive layer of carbon nanotubes is also proposed, the method comprising mixing carbon nanotubes with a solvent to form a suspension, applying the resulting suspension onto the metal foil surface so that the amount of carbon nanotubes on the said surface is of 100 ng/cm²-10 µg/cm².ng/cm² and they are arranged randomly, and then drying the suspension.

## Description

### Field of the Invention

The invention relates to electrically conductive means and methods of their manufacturing.

### Description of the Related Art

The design of electrochemical power sources, such as lithium-ion batteries and supercapacitors, provides for a pair of electrodes. These electrodes are composed of an active electrode layer and an adjacent current collector made of metal foil.

One of the challenges that should be considered in manufacturing such electrodes is the internal resistance of the electrode, which leads to energy losses and thereby reduces the performance of power sources. The internal resistance of the electrode, in addition to other factors, is affected by the contact resistance between the active electrode layer and the current collector.

Various technological solutions are employed to reduce this resistance; in particular, a special conductive layer contacting the active electrode layer is formed on the surface of the current collector.

For example, a lithium-ion battery cathode is known made of amorphous silicon, with a current collector in the form of aluminum foil coated with a non-porous titanium serving as a conductive layer [RF Patent No. 135187, IPC H01M4/12 H01M4/20].

An electrode with an aluminum current collector is known, on which a several micrometers thick oxide film is formed, through which an active electrode layer of activated carbon is attached to the current collector by introducing solid carbon granules through the film surface into the current collector, thereby reducing contact resistance between the active electrode layer and the current collector [US Patent No. 6191935, IPC H01G 9/00]. The following substances are used as granules: acetylene black, powdered graphite or crystalline carbon.

Showa Denko K.K manufacturers metal foil provided with a carbon black layer and organic binding materials. Its main disadvantage is high cost, since it is 2-3 times as expensive as foil without a conductive layer, as well as great thickness of the said conductive layer.

Aluminum foil with a forest of vertically aligned carbon nanotubes on its surface is known [Journal of Power Sources 227 (2013) p.218-228]. This foil has low contact resistance of about 0.42-0.15 mΩ/g, which makes it exceptionally attractive for use as current collectors, e.g. in high-power supercapacitors.

Its main disadvantage is high cost due to the sophisticated and cost demanding technology of growing vertically aligned carbon nanotubes on the foil surface.

### Summary of the Invention

The invention solves the problem of creating metal foil with a conductive layer of lower cost and simpler manufacturing technology.

The set problem is solved by providing metal foil having a surface provided with a conductive layer comprising carbon nanotubes, wherein the conductive layer is applied onto the foil surface so that the carbon nanotubes are arranged randomly and in an amount of 100 ng/cm²-10 µg/cm².

Carbon nanotubes may be single wall and/or double wall.

The foil may be made of aluminum, or copper, or nickel, or alloys thereof, for example, as well as of other suitable metals and alloys.

The conductive layer may be formed on the surface of the metal foil by applying thereto a suspension containing carbon nanotubes and a solvent.

The suspension may contain a solvent from the following series: water, ethanol, isopropanol, toluene, organic solvent, n-methylpyrrolidone.

Besides, the suspensioncan further contain a dispersanta surfactant, e.g. from the following series: polyvinylpyrrolidone (PVP), polyacrylic acid (PAA), polystyrene sulfonate (PSS), carboxymethyl cellulose (CMC) and a sodium salt of CMC, lignosulfonates, ammonium salts of polymers, sodium dodecilsulfate, and sodium dodecilbensolsulponate.

The set problem is also solved by providing a method for manufacturing metal foil with a conductive layer comprising carbon nanotubes, the method comprising mixing carbon nanotubes with a solvent to form a suspension, applying the resulting suspension onto the metal foil surface so that the amount of carbon nanotubes thereon is 100 ng/cm²-10 µg/cm², and then drying.

Single wall and/or double wall carbon nanotubes are preferably used in manufacturing foil with a conductive layer.

The foil may be made of aluminum, or copper, or nickel, or alloys thereof, for example, as well as of other suitable metals and alloys.

Preferably, a substance from the following series can be used as a solvent: water, ethanol, isopropanol, toluene, organic solvent, n-methylpyrrolidone.

The suspension may also contain a dispersant, i.e. a substance that forms and stabilizes the suspension, which can be selected from the following series : polyvinylpyrrolidone (PVP), polyacrylic acid (PAA), polystyrene sulfonate (PSS), carboxymethyl cellulose (CMC) and a sodium salt of CMC, lignosulfonates, ammonium salts of polymers, sodium dodecilsulfate, and sodium dodecilbensolsulponate.

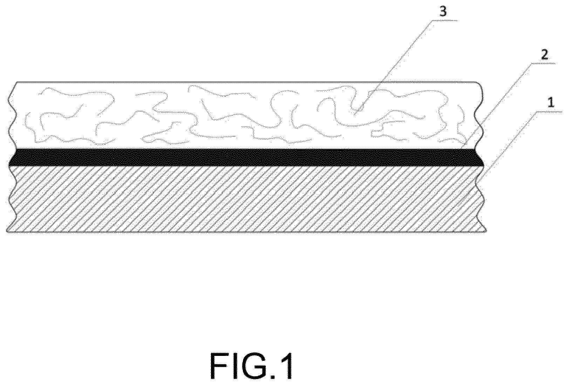

The proposed metal foil with a conductive layer is shown as a current collector of the electrode in Fig. 1, where: 1 is the metal foil, 2 is the conductive layer comprising carbon nanotubes, 3 is the active electrode layer.

Metal foil with a conductive layer is manufactured as follows.

The prepared single wall and/or double wall carbon nanotubes are mixed with a solvent, e.g. water. A dispersant is added, e.g. polyvinylpyrrolidone, and the mixture is dispersed ultrasonically using an ultra-sonicator, thereby producing a suspension containing carbon nanotubes. This suspension is then applied onto the foil 1 surface based on the condition that the carbon nanotubes are arranged on the surface randomly and in an amount of 100 ng/cm²-10 µg/cm². The suspension may be applied by aerosol spraying, air brush, ultrasonic spray or by any other known method suitable for this purpose.

After the metal foil surface is dried, a thin layer remains on it comprising carbon nanotubes 2 in an amount sufficient to ensure its good conductivity. When such foil is used as a current collector of the electrode, the conductive layer reduces contact resistance of the current collector and the active electrode substance 3, to which the foil is attached.

The manufacturing of such foil requires less expenses than of foil with a conductive layer made of a forest of carbon nanotubes, and is much simpler. Accordingly, the cost of the described foil is lower than that of the prototype.

### Brief Description of Drawings

Fig. 1 shows metal foil with a conductive layer as a current collector of the electrode, where: 1 is the metal foil, 2 is the conductive layer comprising carbon nanotubes, 3 is the active electrode layer.

### Industrial Applicability

The proposed metal foil with a conductive layer may be used preferably in electrochemical power sources as current collectors, but its usage is not limited by this application. It can apparently find other applications as well.

### Embodiments of the Invention

### Example 1.

The single wall and double wall carbon nanotubes are mixed with polyvinylpyrrolidone in a ratio of 50/50 wt%. Water is added to this mixture based on the content of nanotubes in the resulting mixture at a level of 0.2 wt%. The resulting mixture is dispersed using an ultra-sonicator. The resulting suspension is applied onto the surface of aluminum foil with an air brush based on consumption of the said suspension of 50 to 60 mL per 1 m² of the foil area. The resulting layer on the foil surface is air-dried. The content of carbon nanotubes in the applied conductive layer is 10 µg/cm².

When the aluminum foil with the resulting conductive layer is used as a current collector of the electrode, electrode resistance is 40 Ω.

When the same aluminum foil without a conductive layer is used, electrode resistance is 300 Ω.

### Example 2.

The single wall and double wall carbon nanotubes are mixed with polyvinylpyrrolidone in a ratio of 50/50 wt%. n-Methylpyrrolidone is added to this mixture based on the content of nanotubes in the resulting mixture at a level of 0.1 wt%. The resulting mixture is dispersed using an ultra-sonicator. The resulting suspension is applied onto the surface of aluminum foil with an air brush based on consumption of the said suspension of 50 to 60 mL per 1 m² of the foil area.

The resulting layer on the foil surface is dried. The content of carbon nanotubes in the applied conductive layer is 5 µg/cm².

When the aluminum foil with the resulting conductive layer is used as a current collector of the electrode, electrode resistance is 42 Ω.

When the same aluminum foil without a conductive layer is used, electrode resistance is 300 Ω.

## Claims

1. Metal foil having a surface provided with a conductive layer comprising carbon nanotubes, **characterized in that** the conductive layer is applied so that the carbon nanotubes are arranged on the foil surface randomly and in an amount of 100 ng/cm²-10 µg/cm².

2. The metal foil of claim 1, **characterized in that** the conductive layer comprises single wall and/or double wall carbon nanotubes.

3. The metal foil of claim 1, **characterized in that** the foil is made of aluminum, or copper, or nickel, or alloys thereof.

4. The metal foil of claim 1, **characterized in that** the conductive layer is formed on its surface by applying a suspension which contains carbon nanotubes and a solvent.

5. The metal foil of claim 4, **characterized in that** the suspension contains a solvent from the following series: water, ethanol, isopropanol, toluene, organic solvent, n-methylpyrrolidone.

6. The metal foil of claim 4, **characterized in that** the suspension further contains a dispersant from the following series: polyvinylpyrrolidone (PVP), polyacrylic acid (PAA), polystyrene sulfonate (PSS), carboxymethyl cellulose (CMC) and a sodium salt of CMC, lignosulfonates, ammonium salts of polymers, sodium dodecilsulfate, and sodium dodecilbensolsulponate.

7. A method for manufacturing metal foil with a conductive layer on the its surface, **characterized in that** a layer of suspension containing carbon nanotubes and a solvent is applied onto the foil surface so that the amount of nanotubes on the said surface is 100 ng/cm²-10 µg/cm² and they are arranged randomly, and then the applied suspension layer is dried.

8. The method of claim 7, **characterized in that** the suspension contains single wall and/or double wall carbon nanotubes.

9. The method of claim 7, **characterized in that** the suspension contains a solvent from the following series: water, ethanol, isopropanol, toluene, organic solvent, n-methylpyrrolidone.

10. The method of claim 7, **characterized in that** the suspension further contains a dispersant from the following series: polyvinylpyrrolidone (PVP), polyacrylic acid (PAA), polystyrene sulfonate (PSS), carboxymethyl cellulose (CMC) and a sodium salt of CMC, lignosulfonates, ammonium salts of polymers, sodium dodecilsulfate, and sodium dodecilbensolsulponate.

11. The method of claim 7, **characterized in that** the metal foil is made of aluminum, or copper, or nickel, or alloys thereof.
